# EUROPEAN PATENT APPLICATION

(11) **EP 1 158 106 A1**
(43) Date of publication of application: **28.11.2001**
(21) Application number: 01201948.5
(22) Date of filing: 23.05.2001
(51) Int. Cl.: E02D 27/32, F16L 1/028, H02G 9/00

(54) **Building provided with a duct for cables and fluid pipes**

(30) Priority: 23.05.2000 NL 1015278
(71) Applicant: KONINKLIJKE WEGENBOUW STEVIN, 3508 RG Utrecht (NL)
(72) Inventor: Van Schaik, Marinus Adrianus Wilhelmus, 6601 VE Wychen (NL); Groenendijk, Adrianus Cornelis Maria, 7083 BX Zaandam (NL)
(74) Representative: Jorritsma, Ruurd

(57) **Abstract**

The invention relates to two or more adjacent buildings (1) each having a foundation and each provided with a duct (2) to contain cables and pipes (3), wherein the duct (2) is permanently joined to an exterior of the respective building (1) or to the foundations (4) thereof, in an essentially horizontal direction. The duct (2) according to the invention runs alongside several buildings (1) and opens into an adjoining pit from where the cables and/or pipes are fed into the buildings. The duct (2) can be sub-divided into compartments (23, 24) in order to make bundling of the various cables and pipes (3) possible.
The duct and pit system according to the invention and the cables and pipes integrally present therein replace both the conventional district or road distribution system and all conventional (side) connections of all cables and pipes to the individual buildings.

## Description

The invention relates to two or more adjacent buildings each having a foundation and each provided with a duct to contain cables.

Ducts for containing cables are known from the prior art. Inside houses, office buildings and the like cables are fed as bundles through the buildings. Usually these bundled cables are placed in a duct, which duct is fixed to a wall or along the ceiling of the building. The ducts that are known from the prior art usually contain only one type of cable.

To run cables between different buildings or from feeder stations to buildings the cables are laid in the ground. In general, in residential areas the cables are laid in the ground at a depth of approximately half a metre. The most important reason for this is that the cables and pipes are then protected against freezing in the case of ground frost and against damage. Moreover, by burying the cables the forces acting on the surface are distributed, so that they do not act directly on the cables and pipes. The cables are buried without additional casing and therefore also have to be well protected against effects that can arise from the outside.

One disadvantage of burying cables and pipes individually in the ground is that the cables and pipes must have a high degree of resistance to mechanical stresses and effects from the outside. The costs of cables and pipes of so-called 'direct-burial quality' are appreciably higher than those of cables and pipes of so-called 'indoor quality'.

A further disadvantage of the current method of burying cables is that the ground has to be excavated for each new or additional cable and/or pipe. In this context consideration must be given in particular to telephone and TV cabling, electricity cabling, gas and water pipes, effluent pipes and the like.

Since these activities can often not be carried out at the same time, it regularly occurs that the road, pavement or ground has to be opened up in order to lay cables or pipes or to carry out work on the networks.

Laying cables and/or pipes under the road or pavement has the disadvantage that the distance from a branch point in a continuous cable and/or pipe to a building termination is relatively long.

It is also possible that, when excavating, damage can inadvertently be caused to one's own cables and pipes or to those of others.

A further disadvantage is that the ground in which the cables and pipes connecting various buildings to one another are located can be subject to settlement. Buildings, which often have pile foundations, settle to a lesser extent than the surrounding ground. If the surrounding ground in which the cables and pipes have been buried settles in the course of time as a result of such settlements there is a risk that the forces with which the cables and pipes have to cope become too high, so that there is a possibility of damage to the cables. In the worst case the cable can break or the pipe can develop a leak.

A duct for containing cables that can be installed beneath the paving of a pavement is disclosed in US Patent US-A 3 503 425. The disadvantage of the known system is that the ground has to be opened up in order to lay additional cables or to repair cables, as a result of which traffic is impeded. Furthermore, an entire duct system has to be lifted when feeding in an additional cable.

Utility model DE-U 9 407 601 discloses a hollow kerb in which various cables can be laid. Here again the disadvantage is that when adding additional cables or carrying out repairs to them part of the pavement and/or of the road has to be opened up, which gives rise to hindrance to traffic.

French Patent Application FR-A 2 644 749 discloses a floating dwelling on a pontoon which is provided with a separate duct for telecommunications and power cables, the duct being hollowed out in floating material close to the top surface of the pontoon.

One aim of this invention is to provide a system with which multiple cables and pipes can be laid to a building in a simple and efficient manner and can be connected in said building.

A further aim of the present invention is to provide a system for laying cables which, to prevent breaking of cables and leaking of pipes, is able to withstand the various settlements which arise in the ground.

A further aim of the invention is to provide a system that is simple to maintain without excavation work having to be carried out. It must also be possible subsequently to replace or to add cables or pipes without excavation work.

A further aim of the invention is to provide a system that replaces the conventional branching to a building and with which a transition from ground to building is avoided.

Yet a further aim of the invention is to provide a system that is well protected against outside influences and against influences that can act on the system from the inside. In particular, it must be possible for water pipes and electricity cables to be alongside one another in the same system. The bundling of the cables and pipes must also ensure that excavation work is superfluous and the resulting damage to cables or pipes is prevented.

Said aims are achieved in that the duct extends alongside at least the first and the second building, the duct being joined to an exterior of the buildings in an essentially horizontal direction to the respective building or to the foundations thereof and cables as well as fluid pipes being placed in the duct, at least one pit adjoining the duct being provided for feeding the cables and/or pipes from the duct into the buildings.

The duct and pit system according to the invention and the cables and pipes integrally present therein replace both the conventional district or road distribution system and all conventional (side) connections of all cables and pipes to the individual buildings.

Using the duct to accommodate cables and pipes, which duct can be joined to the foundations of the building or to the exterior wall thereof, or forms part thereof, enables the buildings to be handed over more rapidly as a shell. At a later stage the cables and pipes can be installed without digging up the road and without disruption between the various installers. Because the cables and the pipes in the duct are subject to the same movements as the building, the risk of damage at the transition from the surroundings of the building to the building is prevented.

Additional cables and/or pipes can easily be added in the duct, without digging up the road or kerb. Subsequent domestic connections to cables already present in the duct are substantially simplified by the use of the duct and pit system according to the invention. The duct furthermore protects the cables and the pipes against outside influences. Damage, for example through cable breaks while pulling during excavation work, no longer arises when a duct is used. Moreover, the quality of the cables and pipes can be adjusted to the protective environment of the duct. When a duct is used as casing use can be made of cables and pipes of indoor quality instead of the customary direct-burial quality. The price advantage is appreciable.

Easy branching of the cables and pipes to a building, and also simplified maintenance, are achieved in that the duct adjoins a pit, preferably at each building connection, which pit is easily accessible from the building. The cables and pipes are introduced into the duct through the opening in this pit, which is located at or virtually at ground level. For repair or maintenance work or when adding different or additional cables and/or pipes the cables and pipes can be removed from and fed into the duct via this opening. To enable this process to proceed easily, the shape or cross-section of the ends of the duct, which join on to the pit, can be enlarged, so that a larger bend radius for introducing cables and pipes results.

What is achieved as a result of the facility for easy introduction and removal of the cables and pipes into and out of the duct is that the road does not have to be opened up. There is therefore also no great inconvenience for local residents and high costs, caused by excavation work (earth moving), can be avoided.

Coupling the duct to the foundation of a building has the additional advantage that long (building) drops for cables and pipes can be avoided. The number of meters of cables and pipes, and thus also the amount of earth moving, are limited by this means. This then also leads to a saving in costs.

The cables and pipes are preferably separated from one another in the duct. For instance, CATV, telephone and IT cables, on the one hand, and electricity cables, on the other hand, will not be laid unprotected alongside one another. This is solved by constructing the duct of various compartments. In this way it is possible to prevent the various cables and pipes hindering one another.

The duct can be provided with a rack made up of one or more horizontal or vertical partitions that can be fitted in the duct after this duct has been installed. It is possible to pour the duct, together with the rest of the foundations, in the course of the construction. The rack can be installed in this poured duct. It is also possible to use the rack in a prefabricated duct.

In the case of a hot water pipe, consider, for example, central heating for a block of flats, the compartments can be of insulated construction, such that the heat is retained in the hot water pipe and so that the energy loss during the transport of the water remains restricted. It is then also desirable not to position a hot water pipe immediately alongside a cold water pipe, in order to prevent cooling and/or heating of one another.

When linking two buildings, or residential blocks, located some distance apart settlement of the duct can be prevented by providing the duct with foundations at one or more points between the two buildings. This is important if relatively large distances have to be bridged, for example between a distribution centre and a residential block. In the case of relatively long bridging between residential blocks or between residential blocks and a distribution centre it is possible to change to a duct of flexible material having a greater length. In the locations where the duct runs along a building the duct is preferably joined to this building at or close to the foundations of this building, or forms part of the building in these locations. The join does not always have to run over the full length of the building. If the duct is made of relatively rigid material, such as concrete, plastic or metal, it suffices to provide support having a length of, for example, half the width of a dwelling at both ends of a duct. In the case of larger buildings, support over a few metres at regular intervals can suffice. If the underlying ground will not exhibit substantial settlement or if the duct is made from a flexible material, separate foundations between the buildings are not required.

A few non-limiting embodiments of a duct according to the present invention will be explained in more detail with reference to the figures in the appended drawing. In this drawing:
Fig. 1 shows a view of a cable duct which runs in the longitudinal direction along the foundations and extends over a few houses;
Fig. 2 shows a detailed longitudinal sectional view of the pit at the location of a house connection; and
Fig. 3 shows a cross-sectional view of a duct that has been installed on the base of the foundation.

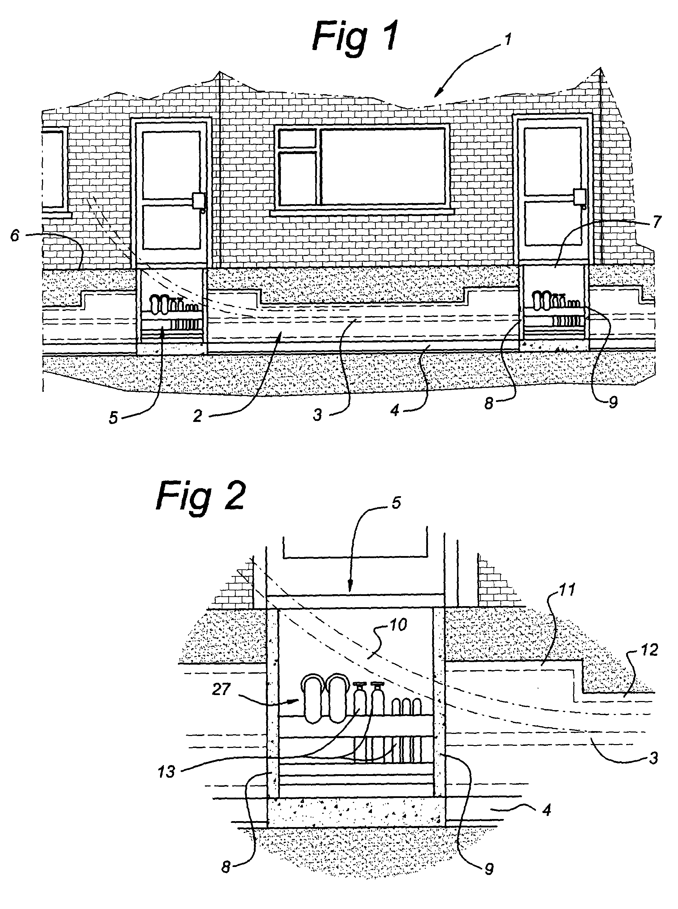

Figure 1 shows a view of a cable duct 2 which in the longitudinal direction is supported on the foundations 4 and extends along a number of houses 1. Houses 1 that are built in a street alongside one another are connected to electricity and communication cables, gas and water pipes 3 and a sewerage system. These cables and pipes 3 are brought together as a bundle in the duct 2. At the location of the service intake, the duct 2 connects on to a pit 5. This pit 5 has an opening 7 on the ground level side 6. The continuous cables and pipes 3 are branched in the pit 5 and the drop cables and pipes 3 pass horizontally through the wall to the service intake 27. The pit 5 has connections for the duct 2 on two sides 8, 9. At the points where the duct 2 connects to the pit 5 the cross-section of the duct 2 is larger than that for the unwidened parts of the duct 2. This increase in cross-section takes place only over a limited length of the duct 2, measured from the pit 5, such as, for example, 1 metre.

Figure 2 shows a detailed longitudinal sectional view of a pit 5 at the location of the service intake. A pipe 10 which, because of the increase in cross-section close to the pit 5, can have a relatively large bend radius when introducing and removing the pipe, has been placed in the duct 2. The increased bend radius is important in particular for gas and water pipes to prevent kinking in the pipes and to be able to introduce these into, and to remove these from, the duct easily and without expending substantial force. In this embodiment the increase in the cross-section of the duct 2 is formed by a step in the cross-section, for example from 60 cm to 1 metre. At the ground level side 6 the top edge 11 of the end of the duct 2 is higher than the top edge 12 of the duct 2 in the middle between two pits 5. From the pit 5 the pipes run directly, horizontally through the foundation into the house 1 at the so-called service intake. From the service intake the pipes and cables 3 continue to the meter cupboard (not shown).

The pit 5 serves as a splitting point for the various cables and pipes 3 that run through the duct 2. Virtually all branching of the cables and pipes 3, which run into the dwelling, takes place in the pit 5. The cables and pipes 3 are readily accessible through the open top 7 of the pit 5 on the ground level side 6 for making domestic connections and carrying out maintenance and for work that has to be carried out in the future on the cables and pipes 3.

The duct 2 is partially supported on the underside by part of the foundations 4 of the houses 1. The duct 2 is preferably firmly fixed to these foundations 4 (not shown) in order to counteract settlements and shifts of the duct 2 with respect to the house 1. This fixing of the duct 2 to the foundations 4 is optional.

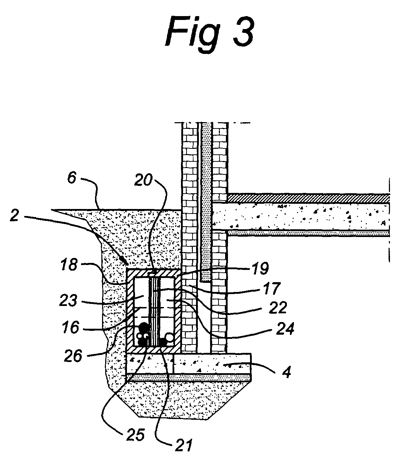

Figure 3 shows a cross-sectional view of a duct 2 that has been installed on the foundations 4. Horizontal projections 15, which serve as support for the duct 2, have been made at various points in the longitudinal direction of the foundations at the side of the foundations 4. In the embodiment shown a side wall 16 of the duct 2 is in contact with the vertical wall 17. The duct 2 can be permanently fixed to the wall 17 and/or to the horizontal projections 15 on the foundations. It is also possible that the duct is mounted on the vertical foundation wall. In this case the horizontal projections 15 can be omitted.

The ground cover (shaded) on the top of the duct 2 is approximately half a metre deep. This value is important for distribution of forces which are able to act on the duct 2 from the ground level 6 and in order to be virtually certain that freezing of the cables and pipes located in the duct 2 will not occur. If these factors are not important, the ducts can also be installed at a different depth, for example at ground level.

The duct 2 is made up of two halves 18, 19 which are positioned horizontally in contact with one another. A step 20, 21 at the location of half of the thickness of the duct material prevents water penetrating into the duct 2. The two halves 18, 19 are therefore also joined to one another such that they fit well. A vertical wall 22 is arranged in the middle of the duct 2. This wall 22 provides the physical separation between the compartment 23 and the compartment 24. The partition 22 can be provided with insulation (not shown) to prevent heat transfer between the two compartments 23, 24. Cables and pipes 3 are placed in the two compartments 23, 24. Separate pipe sleeves 25 are also placed in both compartments for the installation of future facilities.

The normal height of the duct 2, if the cross-section is not at the location of an increase in cross-section, is indicated by means of the broken lines 26. In the embodiment in Figure 3 the height of the duct 2 at the location of the connection at the pit 5 is approximately twice that in the middle between two pits 5.

## Claims

1. Two or more adjacent buildings (1) each having a foundation and each provided with a duct (2) to contain cables (3), **characterised in that** the duct (2) extends alongside at least the first and the second building, the duct being joined to an exterior of the buildings (1) in an essentially horizontal direction to the respective building or to the foundations (4) thereof and cables (3) as well as fluid pipes being placed in the duct (2), at least one pit (5) adjoining the duct (2) being provided for feeding the cables and/or pipes from the duct into the building.

2. Buildings (1) according to Claim 1, **characterised in that** the duct (2) consists of various compartments (23, 24) which are separated from one another by walls (22) over the length of the duct (2).

3. Buildings (1) according to Claim 2, **characterised in that** the walls (22) form a rack, which rack is fitted in the duct (2) such that it can be removed.

4. Buildings (1) provided with a duct (2) according to one of the preceding claims, **characterised in that** the duct (2) is made up of at least two parts (18, 19), which are joined to one another at least at a bottom (21) and top (20).

5. Buildings (1) according to one of the preceding claims, **characterised in that** the cross-section of the duct (2) is enlarged at the location of a connection to the pit (5).

6. Buildings (1) provided with a duct (2) according to Claim 3, **characterised in that** at least one interior wall (22) of a compartment (23, 24) of the duct (2) is insulated in order to prevent temperature transfer from one compartment (23, 24) to another compartment (23, 24).

7. Buildings (1) according to one of the preceding claims, **characterised in that** the duct (2) extends between two buildings (1) located some distance apart and between the buildings (1) is supported by its own foundation (4).

8. Buildings (1) according to Claim 7, **characterised in that** the buildings are located some distance apart, the duct (2) extending between the two buildings (1) located some distance apart and being made of a flexible material.

9. Buildings (1) according to one of the preceding claims, **characterised in that** the duct is provided with a closable opening on the ground level side.

10. Method for constructing two adjacent buildings (1) each having a duct (2) to contain cables (3), **characterised in that** an exterior of the duct (2) is joined to the building (1) or to the foundations (4) thereof, in an essentially horizontal direction, and **in that** cables as well as fluid pipes (3) are arranged in the duct, the cables and the fluid pipes (3) being fed from the duct into the building at the location of a pit (5) connected to the duct (2).

11. Method according to Claim 10, **characterised in that** the cables (3) and fluid pipes are arranged in separate compartments (23, 24) of the duct (2).

12. Method according to Claim 10 or 11, **characterised in that** the duct has an enlarged cross-section in the vicinity of the pit (5).
